# EUROPEAN PATENT SPECIFICATION

(11) **EP 3 299 215 B1**
(45) Date of publication and mention of the grant of the patent: **01.05.2019**
(21) Application number: 17190017.8
(22) Date of filing: 08.09.2017
(51) Int. Cl.: B60N 2/68, B60N 2/70, B60N 2/58, B60N 2/66

(54) **VEHICLE SEAT**
FAHRZEUGSITZ
SIÈGE DE VÉHICULE

(30) Priority: 15.09.2016 JP 2016180487
(43) Date of publication of application: 28.03.2018
(73) Proprietor: TOYOTA JIDOSHA KABUSHIKI KAISHA, Toyota-shi, Aichi, 471-8571 (JP)
(72) Inventor: GONZALEZ URIBE, Carlos David, Toyota-shi,, Aichi 471-8571 (JP); KATOH, Kohshi, Toyota-shi,, Aichi 471-8571 (JP)
(74) Representative: TBK

(56) References cited:
- US-A1- 2011 057 497
- US-A1- 2015 239 381

## Description

### BACKGROUND

### Field of the Disclosure

Embodiments of the present application relate to a vehicle seat.

### Discussion of the Related Art

A vehicle seat taught by US 2015/0239381 A1 comprises a net attached to a seat backrest frame, a ring-shaped connection member having a plurality of string holes that is located higher than a vertical center of the seat backrest frame, and string members arranged radially between the seatback frame and the connection member to form a net serving as a backrest.

According to the teachings of US 2015/0239381 A1, since the backrest is formed of the strings having flexibility to hold a back of an occupant, a thickness of a seatback may be reduced in comparison with a conventional seatback having a urethane pad as a cushion. In the vehicle seat taught by US 2015/0239381 A1, however, the strings are attached to the seat backrest frame and the connection member directly or indirectly. That is, in the vehicle seat taught by US 2015/0239381 A1, it is not easy to adjust a tension and so on of the backrest in accordance with preferences of the occupant. In addition, the strings may not be attached to the seat backrest frame and the connection member easily.

### SUMMARY

The object of the present patent is an invention, which is defined by the technical features set forth in claim 1.

Embodiments of the present disclosure relates to a vehicle seat comprising: a frame contoured along an occupant's body; a net member drawn within the frame to support the occupant; and a sheet member having a mesh structure that covers the net member. In order to achieve the above-explained objective, according to the embodiments of the present disclosure, the net member is formed of a plurality of strings. The sheet member comprises a plurality of fitting grooves, and the sheet member is attached to the net member by fitting the strings into the fitting grooves. The frame includes a first frame and a second frame combined with the first frame, and the second frame includes a plurality of through holes for letting through the strings to form the net member. A peripheral edge of the sheet member is held between a clamping member formed by the first frame and the second frame.

In a non-limiting embodiment, the frame may include a seat base frame for holding a hip area of the occupant. The seat base frame may include the first frame, the second frame, and a lower frame attached to the seat base frame from below while being depressed downwardly. The strings may be drawn within the second frame to form the net member, and the second frame may be combined with the first frame from above. The net member may be connected to the lower frame to be pulled downwardly.

In a non-limiting embodiment, the frame may include a seatback frame for holding a back area of the occupant. The seatback frame may comprise a sub-frame suspended from the seatback frame to hold a lumbosacral area of the occupant while being allowed to swivel in accordance with a twisting motion of the occupant. The seatback frame may include the first frame and the second frame, and the sub-frame may include a first sub-frame and a second sub-frame. The second frame of the seatback frame may be combined with the first frame of the seatback frame from a front side, and the second sub-frame of the sub-frame may be combined with the first sub-frame of the sub-frame from the front side.

In a non-limiting embodiment, one end of the string may be passed through one of the through holes, other end of the string may be passed through another one of the through hole, and the end portions of the string may be joined to each other.

Thus, according to the embodiments of the present disclosure, the frame of the vehicle seat is a two-part frame including the first frame and the second frame combined with the first frame. The strings are drawn within the second frame to form the net member while passing thorough the through holes, and the sheet member is attached to the net member by fitting the strings into the fitting grooves. An assembly of the second frame is fitted into the first frame in such a manner that the peripheral edge of the sheet member is held by the clamping member formed of the first frame and the second frame. According to the embodiments of the present disclosure, therefore, the net member may be formed within the second frame easily, and the seat base frame and the seatback frame may be assembled easily. In addition, spare assemblies of the second frame in which tensions of the net members are different may be prepared in advance. According to the embodiments of the present disclosure, therefore, tension of the net member may be altered easily according to the occupant's preference by merely changing the assemblies of the second frame.

### BRIEF DESCRIPTION OF THE DRAWINGS

Features, aspects, and advantages of exemplary embodiments of the present invention will become better understood with reference to the following description and accompanying drawings, which should not limit the invention in any way.
Fig. 1 is a side view showing the vehicle seat according to at least one embodiment of the present disclosure;
Fig. 2 is an exploded perspective view showing parts of the seatback according to at least one embodiment of the present disclosure;
Fig. 3 is a partial perspective view showing a joint between the sheet member and the string;
Fig. 4 is a partial perspective view showing a cross-section of the frame according to at least one embodiment of the present disclosure;
Fig. 5 is a perspective view showing another example of the seat member;
Fig. 6 is a perspective view showing the cross-section of the frame at different portion;
Fig. 7 is an exploded view showing outer frames and inner frames of the seatback frame and the sub-frame; and
Fig. 8 is an exploded view showing an outer frame and an inner frame of the seat base frame.

### DETAILED DESCRIPTION OF THE PREFERRED EMBODIMENT(S)

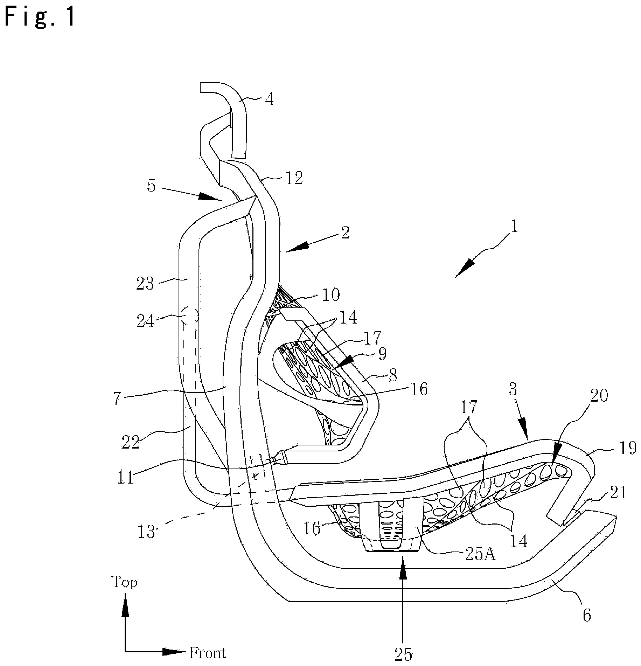

Preferred embodiments of the present disclosure will now be explained with reference to the accompanying drawings. Turning now to Fig. 1, there is shown a seat 1 according to the embodiment of the present disclosure. The seat 1 is contoured to hold one person, and is used in some embodiments not only as a driver's seat but also as a passenger's seat, e.g., a front passenger seat. The seat 1 comprises a seatback 2 for supporting an occupant's back, a seat base 3 on which the occupant sits, and a headrest 4 attached to an upper lateral portion of the seatback 2. The seat 1 is mounted on a pair of rails (not shown) so that a longitudinal position of the seat 1 is adjustable in a vehicle compartment.

A main frame 5 of the seat 1 comprises a pedestal frame 6 mounted on the rails, and a seatback frame 7 erected from a rear end of the pedestal frame 6. According to the embodiment shown in Fig. 1, the pedestal frame 6 and the seatback frame 7 are formed integrally to form the main frame 5.

The seatback 2 comprises the seatback frame 7 for holding a back of the occupant, a sub-frame 8 suspended from the seatback frame 7 to hold a lumbosacral area of the occupant while being allowed to swivel in accordance with a twisting motion of the occupant, and a first net member 9 expanding within an upper portion of the seatback frame 7 and the sub-frame 8 to serve as a backrest.

Specifically, each upper end of the sub-frame 8 is individually attached to a front face of each longitudinal portion of the seatback frame 7 slightly above an intermediate level through a first connection member 10 such as a blade spring. A first lateral reinforcement 13 extends between the longitudinal portions of the seatback frame 7 at a lower level, and an intermediate portion of a lower lateral portion is connected to the first lateral reinforcement 13 through a second connection member 11 such as a ball joint. Thus, the sub-frame 8 is attached to the seatback frame 7 in such a manner as to absorb longitudinal load applied from the occupant while being allowed to swivel in accordance with a twisting motion of the occupant.

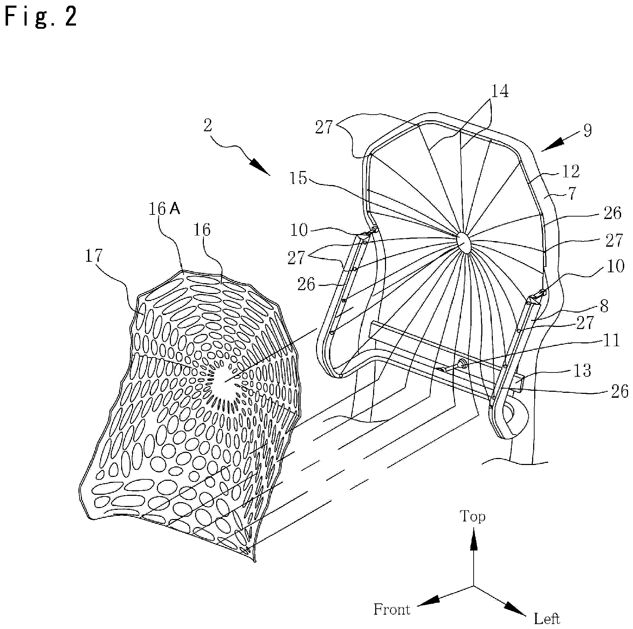

Components of the seatback 2 are shown in Fig. 2 in more detail. The headrest 4 is attached to an upper portion 12 of the seatback frame 7 that is contoured along shoulders of the occupant. As described, the sub-frame 8 is suspended from the seatback frame 7 through the first connection member 10.

As depicted in Fig. 2, the sub-frame 8 is a U-shaped member in which a lower lateral portion is withdrawn backwardly to be connected to the first lateral reinforcement 13 extending between the longitudinal portions of the seatback frame 7 through the second connection member 11. As explained later, the upper portion 12 of the seatback frame 7 is formed by combining at least two parts, and the sub-frame 8 is also formed by combining at least two parts.

The first net member 9 comprises a plurality of strings 14 drawn radially between a hub ring 15 and the upper portion 12 of the seatback frame 7 and the sub-frame 8. The hub ring 15 is situated behind a spine of the occupant at width center of the seatback frame 7 slightly above the intermediate level. One end of the string 14 is passed through one of through holes 27 formed on the seatback frame 7 and the sub-frame 8. An intermediate portion of the string 14 is passed through the hub ring 15, and other end of the string 14 is passed through another through hole 27. The end portions of the string 14 are joined to each other. In order to attach the intermediate portion of the string 14 to the hub ring 15, for example, a plurality of pins (not shown) may be formed in the hub ring 15. In this case, the intermediate portion of each of the string 14 is individually wrapped around the pins in the hub ring 15. Alternatively, a plurality of U-shaped through holes or grooves (not shown may also be formed on an outer circumference of the hub ring 15. In this case, the intermediate portion of each of the string 14 is individually passed through the through hole or groove.

A sheet member 16 as a mesh member is attached to the first net member 9 from the front side. The sheet member 16 comprises a plurality of holes 17 formed in predetermined geometric patterns. The sheet member 16 is outlined along the upper portion 12 of the seatback frame 7 and the sub-frame 8. An outer edge of the sheet member 16 is clamped at least partially by clamping members 26 of the seatback frame 7 and the sub-frame 8 to be attached to the seatback frame 7 and the sub-frame 8. For example, the sheet member 16 may be formed of elastic material such as thermoplastic elastomer by an injection method.

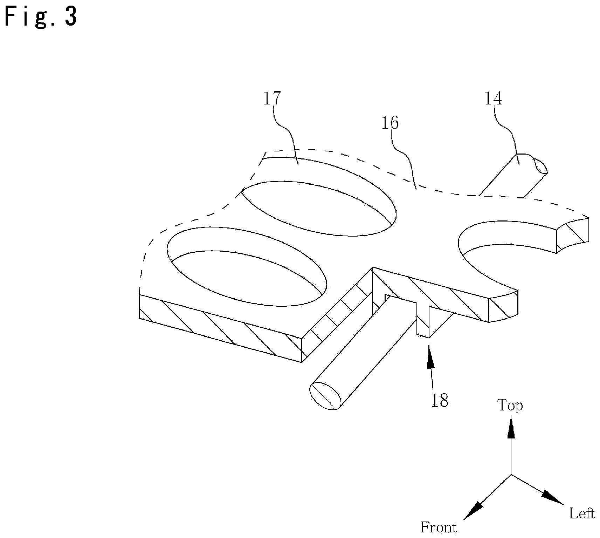

A joint between the sheet member 16 and the string 14 is shown in Fig. 3. As illustrated in Fig. 3, a plurality of fitting grooves 18 are formed on a rear face of the sheet member 16 along the strings 14, and each of the strings 14 is individually fitted into the fitting groove 18. For example, each of the fitting grooves 18 may be formed by a pair of ribs. Here, number of the fitting groove 18 may be altered according to need.

As illustrated in Fig. 1, the seat base 3 for holding the thigh and hip area of the occupant comprises a rectangular seat base frame 19, and a second net member 20 drawn within the seat base frame 19. A seat base frame 19 is attached to the pedestal frame 6 of the main frame 5 in a pivotal manner. Specifically, a front center of the seat base frame 19 is connected to a front center of the pedestal frame 6 in a pivotal manner through a third connection member 21 such as a ball joint, and a rear center of the seat base frame 19 is connected to the seatback frame 7 through an L-shaped pivot shaft 22. In order to suspend the pivot shaft 22 in a pivotal manner, a rear support 23 is attached to the seatback frame 7 from behind. To this end, a fourth connection member 24 also as a ball joint is fixed in the rear support 23 at a predetermined level and in a width center of the seatback frame 7. An upper end of the pivot shaft 22 is connected to the fourth connection member 24 in a pivotal manner, and a lower end of the pivot shaft 22 is connected to the rear center of the seat base frame 19 in a pivotal manner. In the seat 1, therefore, the seat base frame 19 is allowed to pivot around the virtual axis between the third connection member 21 and the fourth connection member 24 with a twisting motion or a swiveling motion of the lumbosacral area of the occupant.

In order to support ischial area of the occupant, a lower frame 25 is attached to the seat base frame 19 from below in such a manner as to extend laterally between a right longitudinal portion and a left longitudinal portion of the seat base frame 19. Specifically, the lower frame 25 as an X-shaped member comprises a pair of diagonal members 25A crossing at an intermediate portion, and the intermediate portion of the lower frame 25 is depressed downwardly.

The second net member 20 also comprises a plurality of strings 14 drawn within the seat base frame 19 in a predetermined pattern. Portions of the second net member 20 supporting ischial bones of the occupant are pulled downwardly by a vertical string 14A to be contoured along the thigh and hip area of the occupant. Specifically, at least two vertical strings 14A are drawn in the longitudinal direction between each portion of the second net member 20 supporting the ischial bone and the lower frame 25. The sheet member 16 is also attached to the second net member 20 within the seat base frame 19 by the same principle explained with reference to Fig. 3.

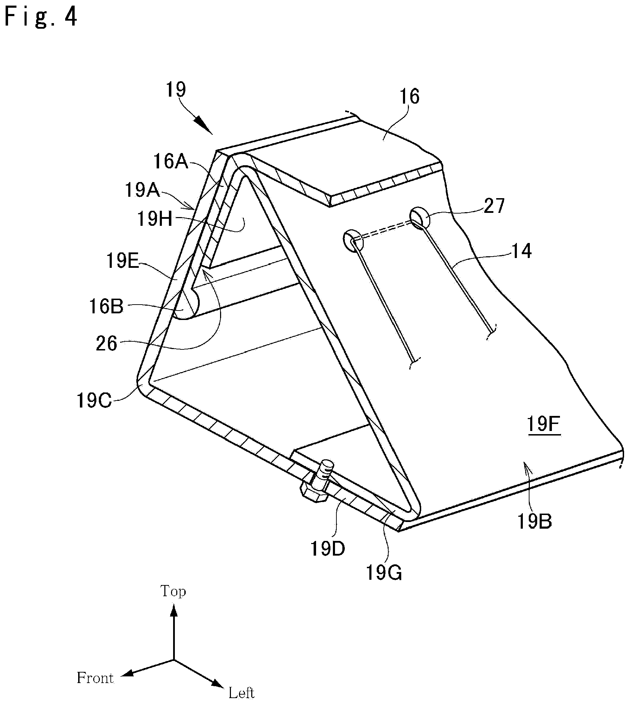

A structure of the seat base frame 19 is shown in Fig. 4 in more detail. As illustrated in Fig. 4, the seat base frame 19 is a two-part frame comprising a first seat base frame 19A connected to the pedestal frame 6 through the third connection member 21, and a second seat base frame 19B combined with the first seat base frame 19A. Specifically, the first seat base frame 19A having an L-shaped cross-section includes a base portion 19D extending inwardly and an outer wall portion 19E extending obliquely upwardly. A corner 19C of the first seat base frame 19A between the base portion 19D and the outer wall portion 19E is situated lower outer side of the seat base frame 19.

The second seat base frame 19B includes an inner slant wall 19F facing inwardly to the thigh and hip area of the occupant, a first bent edge portion 19G overlapped on a leading end portion of the base portion 19D of the first seat base frame 19A, and a second bent edge portion 19H bent downwardly from a level of a leading end of the outer wall portion 19E of the first seat base frame 19A in parallel to the outer wall portion 19E. The base portion 19D of the first seat base frame 19A and the first bent edge portion 19G of the second seat base frame 19B are fixed to each other through e.g., a bolt and a nut.

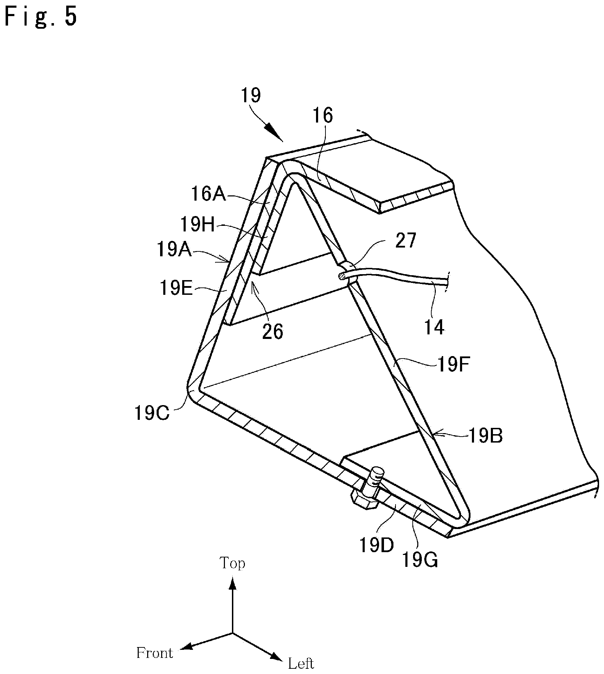

A predetermined clearance is maintained between the outer wall portion 19E of the first seat base frame 19A and the second bent edge portion 19H of the second seat base frame 19B so that a peripheral edge 16A of the sheet member 16 is clamped at least partially between the outer wall portion 19E of the first seat base frame 19A and the second bent edge portion 19H of the second seat base frame 19B. Thus, the outer wall portion 19E of the first seat base frame 19A and the second bent edge portion 19H of the second seat base frame 19B serve as the clamping member 26. In addition, according to the embodiment in Fig. 4, a stopper portion 16B that is thicker than the remaining portion is formed on a leading edge of the peripheral edge 16A of the sheet member 16. As shown in Fig. 5, the stopper portion 16B may be omitted to reduce manufacturing cost of the sheet member 16.

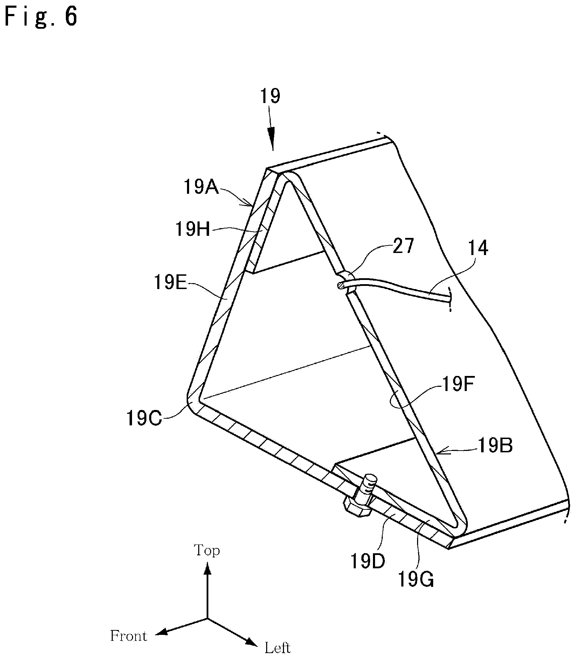

As shown in Fig. 6, the peripheral edge 16A of the sheet member 16 may not necessarily be clamped entirely by the clamping member 26. In the portion of the seat base frame 19 in which the peripheral edge 16A of the sheet member 16 is not clamped by the clamping member 26, the second bent edge portion 19H of the second seat base frame 19B may be brought into contact directly to the outer wall portion 19E of the first seat base frame 19A without maintaining the clearance therebetween.

Turning back to Fig. 4, there is shown the through hole 27 that is also formed on the inner slant wall 19F of the second seat base frame 19B. A plurality of the through holes 27 are formed on the inner slant wall 19F in the longitudinal direction at predetermined interval. For example, as shown in Fig. 4, the string 14 may be attached to the inner slant wall 19F of the second seat base frame 19B to form the second net member 20 through and a pair of through holes 27.

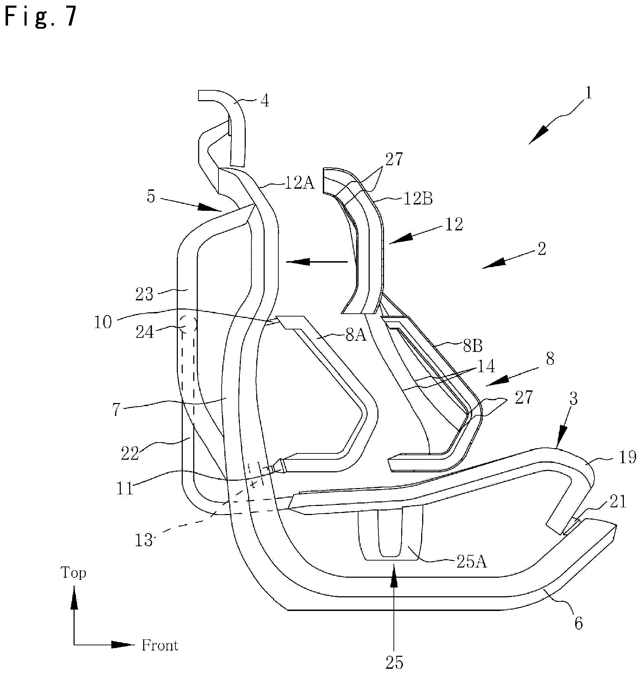

As shown in Fig. 7, the upper portion 12 of the seatback frame 7 is also a two-part frame comprising an outer frame 12A formed integrally with a lower portion of the seatback frame 7, and an inner frame 12B combined with the outer frame 12A from the front side. The outer frame 12A includes a rear portion extending inwardly, and a front portion extending frontward from an outer periphery of the rear portion. That is, the outer frame 12A also has an L-shaped longitudinal cross-section, and the outer frame 12A opens inwardly and frontward. The sub-frame 8 is also a two-part frame comprising an outer sub-frame 8A joined to the seatback frame 7, and an inner sub-frame 8B combined with the outer sub-frame 8A. The outer sub-frame 8A includes a rear portion extending inwardly, and a front portion extending frontward from an outer periphery of the rear portion. That is, the outer sub-frame 8A also has an L-shaped longitudinal cross-section, and the sub-frame 8 also opens inwardly and frontward.

The inner frame 12B of the seatback frame 7 and the inner sub-frame 8B of the sub-frame 8 individually have a similar structure as the aforementioned second seat base frame 19B of the seat base frame 19. Specifically, the inner frame 12B of the seatback frame 7 includes an inner slant wall facing inwardly to the back of the occupant, a first bent edge portion overlapped on a leading end portion of the rear portion of the outer frame 12A, and a second bent edge portion bent backwardly in parallel to a leading end of the front portion of the outer frame 12A. Likewise, the inner sub-frame 8B of the sub-frame 8 includes an inner slant wall facing inwardly to the back of the occupant, a first bent edge portion overlapped on a leading end portion of the rear portion of the outer sub-frame 8A, and a second bent edge portion bent backwardly in parallel to a leading end of the front portion of the outer sub-frame 8A. Specifically, the through holes 27 are formed on the inner slant wall of the inner frame 12B, and the strings 14 are drawn radially between the through holes 27 of the inner frame 12B and hub ring 15 by the above-explained procedures to form an upper half of the first net member 9. Likewise, the through holes 27 are also formed on the inner slant wall of the inner sub-frame 8B, and the strings 14 are also drawn radially between the through holes 27 of the inner sub-frame 8B and the hub ring 15 by the above-explained procedures to form a lower half of the first net member 9. The inner frame 12B of the seatback frame 7 and the inner sub-frame 8B of the sub-frame 8 in which the first net member 9 is thus formed are individually fitted into the outer frame 12A of the seatback frame 7 and the outer sub-frame 8A of the sub-frame 8.

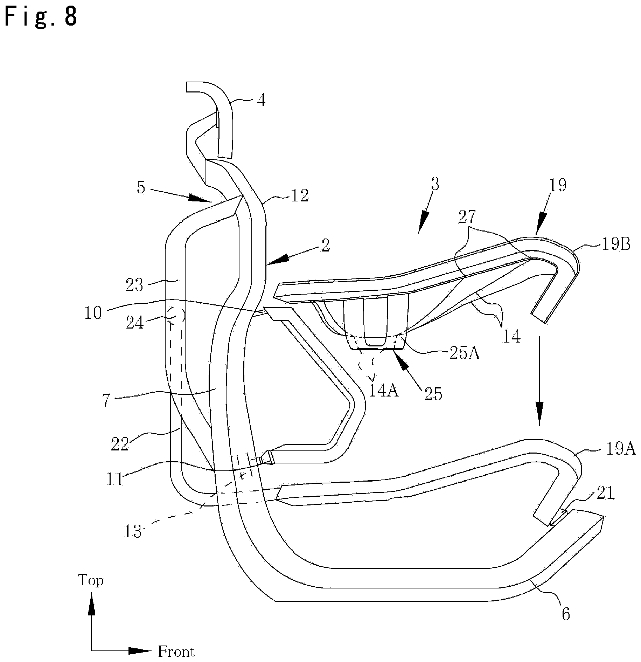

A joint structure of the seat base 3 is shown in Fig. 8. As described, the string 14 are drawn within the inner slant wall 19F of the second seat base frame 19B in the predetermined pattern to form the second net member 20 through the through holes 27 by the above-explained procedures. Instead, each of the strings 14 may also be attached to the inner slant wall 19F by inserting an end portion of each of the strings 14 into the through hole 27, and attaching a stopper member to the end portion of each of the strings 14. As also described, the portions of the second net member 20 supporting the ischial bones of the occupant are pulled downwardly by the vertical strings 14A drawn between the second net member 20 and the lower frame 25. Here, an end portion of the vertical strings 14A may be attached directly to the lower frame 25 by any appropriate means. The sheet member 16 is attached to the second net member 20 within the seat base frame 19 from above by fitting the strings 14 individually into the fitting groove 18 of the sheet member 16. The second seat base frame 19B in which the second net member 20 and the sheet member 16 are thus formed is fitted into the first seat base frame 19A from above while holding the peripheral edge 16A of the sheet member 16 at least partially between the outer wall portion 19E of the first seat base frame 19A and the second bent edge portion 19H of the second seat base frame 19B. Then, the base portion 19D of the first seat base frame 19A and the first bent edge portion 19G of the second seat base frame 19B are fixed to each other through e.g., a bolt and a nut.

A joint structure of the seatback 2 will be explained with reference to Fig. 7. As described, the strings 14 are drawn radially between the inner frame 12B of the seatback frame 7 and hub ring 15 by the above-explained procedures to form an upper half of the first net member 9, and between the inner sub-frame 8B of the sub-frame 8 and hub ring 15 by the above-explained procedures to form a lower half of the first net member 9. The sheet member 16 is also attached to the first net member 9 within the inner frame 12B of the seatback frame 7 and the inner sub-frame 8B of the sub-frame 8 from the front side by fitting the strings 14 individually into the fitting groove 18 of the sheet member 16. The inner frame 12B of the seatback frame 7 and the inner sub-frame 8B of the sub-frame 8 in which the first net member 9 and the sheet member 16 are thus formed are individually fitted into the outer frame 12A of the seatback frame 7 and the outer sub-frame 8A of the sub-frame 8 from the front side. In the seatback 2, the peripheral edge 16A of the sheet member 16 is held at least partially between the second bent edge portion of the inner frame 12B and the front portion of the outer frame 12A, and between the second bent edge portion of the inner sub-frame 8B and the front portion of the outer sub-frame 8A. Then, the rear portion of the outer frame 12A and the first bent edge portion of the inner frame 12B are fixed to each other through e.g., a bolt and a nut. Likewise, the rear portion of the outer sub-frame 8A and the first bent edge portion of the inner sub-frame 8B are fixed to each other through e.g., a bolt and a nut.

Thus, according to the embodiments of the present disclosure, the upper portion 12 of the seatback frame 7 is formed by combining the outer frame 12A with the inner frame 12B, and the sub-frame 8 is also formed by combining the outer sub-frame 8A with the inner sub-frame 8B. The first net member 9 is drawn in advance within the inner frame 12B of the seatback frame 7 and the inner sub-frame 8B of the sub-frame 8, and the inner frame 12B and the inner sub-frame 8B are fitted into the outer frame 12A of the seatback frame 7 and the outer sub-frame 8A of the sub-frame 8 together with the sheet member 16 attached to the first net member 9. According to the embodiments of the present disclosure, therefore, the sheet member 16 may be fixed easily between the inner frame 12B and the outer frame 12A of the seatback frame 7, and between the inner sub-frame 8B and the outer sub-frame 8A of the sub-frame 8. In addition, spare assemblies of the inner frame 12B of the seatback frame 7 and the inner sub-frame 8B of the sub-frame 8 in which tensions of the first net members 9 are different may be prepared in advance. According to the embodiments of the present disclosure, therefore, tension of the first net member 9 may be altered easily according to the occupant's preference by merely changing the assembly of the inner frame 12B of the seatback frame 7 and the inner sub-frame 8B of the sub-frame 8. Further, detachment of the first net member 9 from the clamping member 26 may be prevented by forming the stopper portion 16B on the leading edge of the peripheral edge 16A of the sheet member 16. Furthermore, the outer frame 12A and the inner frame 12B of the seatback frame 7 are fixed to each other through a bolt and a nut, and the outer sub-frame 8A and the inner sub-frame 8B of the sub-frame 8 are also fixed to each other through a bolt and a nut. According to the embodiments of the present disclosure, therefore, the outer frame 12A and the inner frame 12B of the seatback frame 7 may be fixed to each other easily but tightly, and the outer sub-frame 8A and the inner sub-frame 8B of the sub-frame 8 may be fixed to each other easily but tightly. For these reasons, strength and rigidity of the seatback 2 may be enhanced.

Although the above exemplary embodiments of the present invention have been described, it will be understood by those skilled in the art that the present invention should not be limited to the described exemplary embodiments, but that various changes and modifications can be made, if within the scope of the present invention as defined by the claims. For example, the sheet member 16 may also be formed of fabric. The peripheral edge 16A of the sheet member 16 may be clamped not only partially but also entirely by the clamping member 26. In order to further enhance rigidity of the seat base frame 19, the second seat base frame 19B may be formed into a closed shape e.g., into a triangle shape. Likewise, the inner frame 12B and the inner sub-frame 8B may also be formed to have a closed shape. In addition, the upper portion 12 of the seatback frame 7 and the sub-frame 8 may also be formed by combining more than two parts.
A vehicle seat in which a net member may be attached easily to a frame is provided. A frame (7,19) includes a first frame (12A, 19A) and a second frame (12B, 19B), and a net member (9, 20) formed of strings (14) is drawn within the second frame (12B, 19B). A sheet member (16) is attached to the net member (9, 20) by fitting the strings (14) into fitting grooves (18). The second frame (12B, 19B) is combined with the first frame (12A, 19A) in such a manner that a peripheral edge (16A) of the sheet member (16) is held by a clamping member (26) formed of the first frame (12A, 19A) and the second frame (12B, 19B).

## Claims

1. A vehicle seat (1), comprising:
a frame (7,19) contoured along an occupant's body;
a net member (9, 20) drawn within the frame (7,19) to support the occupant; and
a sheet member (16) having a mesh structure that covers the net member (9, 20),
**characterized in that**:
the net member (9, 20) comprises a plurality of strings (14);
the sheet member (16) comprises a plurality of fitting grooves (18), and the sheet member (16) is attached to the net member (9, 20) by fitting the strings (14) into the fitting grooves (18);
the frame (7,19) includes a first frame (12A, 19A) and a second frame (12B, 19B) combined with the first frame (12A, 19A);
the second frame (12B, 19B) includes a plurality of through holes (27) for letting through the strings (14) to form the net member (9, 20); and
a peripheral edge (16A) of the sheet member (16) is held by a clamping member (26) formed of the first frame (12A, 19A) and the second frame (12B, 19B).

2. The vehicle seat (1) as claimed in claim 1,
wherein the frame (7,19) includes a seat base frame (19) for holding a hip area of the occupant,
the seat base frame (19) includes the first frame (19A), the second frame (19B), and a lower frame (25) attached to the seat base frame (19) from below while being depressed downwardly,
the strings (14) are drawn within the second frame (19B) to form the net member (20),
the second frame (19B) is combined with the first frame (19A) from above, and
the net member (20) is connected to the lower frame (25) to be pulled downwardly.

3. The vehicle seat as claimed in claim 1,
wherein the frame (7,19) includes a seatback frame (7) for holding a back area of the occupant,
the seatback frame (7) comprises a sub-frame (8) suspended from the seatback frame (7) to hold a lumbosacral area of the occupant while being allowed to swivel in accordance with a twisting motion of the occupant,
the seatback frame (7) includes the first frame (12A) and the second frame (12B),
the sub-frame (8) includes a first sub-frame (8A) and a second sub-frame (8B),
the second frame (12B) of the seatback frame (7) is combined with the first frame (12A) of the seatback frame (7) from a front side, and
the second sub-frame (8B) of the sub-frame (8) is combined with the first sub-frame (8A) of the sub-frame (8) from the front side.

4. The vehicle seat as claimed in any of claims 1 to 3, wherein one end of the string (14) is passed through one of the through holes (27), other end of the string (14) is passed through another one of the through hole (27), and the end portions of the string (14) are joined to each other.

## Patentansprüche

1. Fahrzeugsitz (1), mit:
einem Rahmen (7, 19), der entlang des Körpers eines Insassen konturiert ist;
einem Netzelement (9, 20), das in dem Rahmen (7, 19) gespannt ist, um den Insassen abzustützen; und
einem Bezugelement (16) mit einer Gitterstruktur, das das Netzelement (9, 20) bedeckt,
**dadurch gekennzeichnet, dass**:
das Netzelement (9, 20) eine Vielzahl von Schnüren (14) umfasst;
das Bezugelement (16) eine Vielzahl von Einsetznuten (18) umfasst und das Bezugelement (16) an dem Netzelement (9, 20) angebracht ist, indem die Schnüre (14) in die Einsetznuten (18) eingesetzt sind;
der Rahmen (7, 19) einen ersten Rahmen (12A, 19A) und einen zweiten Rahmen (12B, 19B) umfasst, der mit dem ersten Rahmen (12A, 19A) kombiniert ist;
der zweite Rahmen (12B, 19B) eine Vielzahl von Durchgangslöchern (27) zum Durchlassen der Schnüre (14) hat, um das Netzelement (9, 20) auszubilden; und
eine Umfangskante (16A) des Bezugelements (16) durch ein Klemmelement (26) gehalten ist, das aus dem ersten Rahmen (12A, 19A) und dem zweiten Rahmen (12B, 19B) ausgebildet ist.

2. Fahrzeugsitz (1) nach Anspruch 1,
wobei der Rahmen (7, 19) einen Sitzbasisrahmen (19) zum Halten eines Hüftbereichs des Insassen hat,
der Sitzbasisrahmen (19) den ersten Rahmen (19A), den zweiten Rahmen (19B) und einen unteren Rahmen (25) hat, der an dem Sitzbasisrahmen (19) während eines Herunterdrückens von unten angebracht wird,
die Schnüre (14) in dem zweiten Rahmen (19B) gespannt sind, um das Netzelement (20) auszubilden,
der zweite Rahmen (19B) mit dem ersten Rahmen (19A) von oben vereinigt ist und
das Netzelement (20) mit dem unteren Rahmen (25) verbunden ist, um heruntergezogen zu werden.

3. Fahrzeugsitz nach Anspruch 1,
wobei der Rahmen (7, 19) einen Rückenlehnenrahmen (7) zum Halten eines Rückenbereichs des Insassen hat,
der Rückenlehnenrahmen (7) einen Hilfsrahmen (8) hat, der an dem Rückenlehnenrahmen (7) aufgehängt ist, um einen lumbosakralen Bereich des Insassen zu halten, während er in Übereinstimmung mit einer Verdrehbewegung des Insassen schwenken kann,
der Rückenlehnenrahmen (7) den ersten Rahmen (12A) und den zweiten Rahmen (12B) hat,
der Hilfsrahmen (8) einen ersten Hilfsrahmen (8A) und einen zweiten Hilfsrahmen (8B) hat,
der zweite Rahmen (12B) des Rückenlehnenrahmens (7) von einer Vorderseite mit dem ersten Rahmen (12A) des Rückenlehnenrahmens (7) zusammengefügt ist und
der zweite Hilfsrahmen (8B) des Hilfsrahmens (8) von der Vorderseite mit dem ersten Hilfsrahmen (8A) des Hilfsrahmens (8) zusammengefügt ist.

4. Fahrzeugsitz nach einem der Ansprüche 1 bis 3, wobei ein Ende der Schnur (14) durch eines der Durchgangslöcher (27) geführt ist, das andere Ende der Schnur (14) durch ein anderes der Durchgangslöcher (27) geführt ist und die Endabschnitte der Schnur (14) miteinander verbunden sind.

## Revendications

1. Siège (1) de véhicule comprenant :
un bâti (7, 19) profilé le long du corps d'un occupant ;
un élément de filet (9, 20) tiré à l'intérieur du bâti (7, 19) pour supporter l'occupant ; et
un élément de feuille (16) ayant une structure de maille qui recouvre l'élément de filet (9, 20),
**caractérisé en ce que** :
l'élément de filet (9, 20) comprend une pluralité de cordes (14) ;
l'élément de feuille (16) comprend une pluralité de rainures d'ajustement (18), et l'élément de feuille (16) est fixé sur l'élément de filet (9, 20) en ajustant les cordes (14) dans les rainures d'ajustement (18) ;
le bâti (7, 19) comprend un premier bâti (12A, 19A) et un second bâti (12B, 19B) combiné avec le premier bâti (12A, 19A) ;
le second bâti (12B, 19B) comprend une pluralité de trous débouchants (27) pour laisser passer les cordes (14) afin de former l'élément de filet (9, 20) ; et
un bord périphérique (16A) de l'élément de feuille (16) est maintenu par un élément de serrage (26) formé avec le premier bâti (12A, 19A) et le second bâti (12B, 19B).

2. Siège (1) de véhicule selon la revendication 1,
dans lequel le bâti (7, 19) comprend un bâti de base de siège (19) pour maintenir une zone de hanche de l'occupant,
un bâti de base de siège (19) comprend le premier bâti (19A), le second bâti (19B) et un bâti inférieur (25) fixé au bâti de base de siège (19) de dessous tout en étant enfoncé vers le bas,
les cordes (14) sont tirées à l'intérieur du second bâti (19B) pour former l'élément de filet (20),
le second bâti (19B) est combiné avec le premier bâti (19A) de dessus, et
l'élément de filet (20) est raccordé au bâti inférieur (25) pour être tiré vers le bas.

3. Siège de véhicule selon la revendication 1,
dans lequel le bâti (7, 19) comprend un bâti de dossier (7) pour maintenir une zone dorsale de l'occupant,
le bâti de dossier (7) comprend un bâti auxiliaire (8) suspendu au bâti de dossier (7) pour maintenir une zone lombo-sacrée de l'occupant tout en étant autorisé à pivoter selon un mouvement de torsion de l'occupant,
le bâti de dossier (7) comprend un premier bâti (12A) et le second bâti (12B),
le bâti auxiliaire (8) comprend un premier bâti auxiliaire (8A) et un second bâti auxiliaire (8B),
le second bâti (12B) du bâti de dossier (7) est combiné avec le premier bâti (12A) du bâti de dossier (7) d'un côté avant, et
le second bâti auxiliaire (8B) du bâti auxiliaire (8) est combiné avec le premier bâti auxiliaire (8A) du bâti auxiliaire (8) du côté avant.

4. Siège de véhicule selon l'une quelconque des revendications 1 à 3, dans lequel une extrémité de la corde (14) passe par l'un des trous débouchants (27), l'autre extrémité de la corde (14) passe par un autre des trous débouchants (27) et les parties d'extrémité de la corde (14) sont assemblées.
